# EUROPÄISCHE PATENTSCHRIFT

(11) **EP 1 588 077 B1**
(45) Veröffentlichungstag und Bekanntmachung des Hinweises auf die Patenterteilung: **26.04.2006**
(21) Anmeldenummer: 03815545.3
(22) Anmeldetag: 19.12.2003
(51) Int. Cl.: F16H 61/46

(54) **REGELUNG FÜR EIN HYDROSTATISCHES GETRIEBE**
CONTROL OF A HYDROSTATIC GEARBOX
DISPOSITIF DE REGLAGE D'UNE TRANSMISSION HYDROSTATIQUE

(30) Priorität: 29.01.2003 DE 10303487
(43) Veröffentlichungstag der Anmeldung: 26.10.2005
(73) Patentinhaber: Brueninghaus Hydromatik GmbH, 89275 Elchingen (DE)
(72) Erfinder: MARKWART, Jürgen, 89278 Nersingen (DE)
(74) Vertreter: Körfer, Thomas
(86) Internationale Anmeldenummer: PCT/EP2003/014615
(87) Internationale Veröffentlichungsnummer: WO 2004/068004

(56) Entgegenhaltungen:
- DE-A- 4 129 667
- DE-C- 4 000 801
- US-A- 5 765 590

## Beschreibung

Die Erfindung betrifft eine Regelung für ein hydrostatisches Getriebe in einem offenen Kreislauf.

In einem offenen Kreislauf saugt eine Hydropumpe aus einem Tankvolumen Druckmittel an und fördert es unter Druck über eine Hauptleitung zu einem Hydromotor. Der Hydromotor dient dabei beispielsweise zum Antrieb eines Fahrzeugs, wobei das Druckmittel, welches durch den Hydromotor strömt durch eine stromabwärts an dem Hydromotor angeschlossene weitere Hauptleitung zurück in das Tankvolumen fließt. Befindet sich ein solches System im Schiebebetrieb, so beginnt der Hydromotor aus der durch die Hydropumpe bedrückten Hauptleitung Druckmittel anzusaugen und wirkt nun seinerseits als Pumpe, die das Druckmittel in Richtung des Tankvolumens fördert.

Um bei einer solchen Anordnung zu verhindern, dass beispielsweise ein von dem hydrostatischen Getriebe angetriebenes Fahrzeug in einen ungebremsten Fahrzustand gerät, ist es z. B. aus der DE 41 29 667 A1, die als nächstliegender Stand der Technik angesehen wird, bekannt, ein Bremsventil zu verwenden, durch welches der Rückfluss von dem als Pumpe wirkenden Hydromotor gedrosselt erfolgt. Während des normalem Fahrbetriebs wird das Bremsventil entgegen einer Federkraft von dem Förderdruck der Hydropumpe in eine Schaltposition gebracht, in der ein Rücklauf des Druckmittels durch das Bremsventil ungedrosselt erfolgen kann. Beim Übergang zum Schiebebetrieb sinkt der Förderdruck der Hydropumpe stark ab, so dass das Bremsventil in seine Ausgangsstellung zurückgekehrt. In dieser Ausgangsstellung ist die stromabwärts des Hydromotors angeordnete Hauptleitung über eine Drosselstelle mit dem Tankvolumen verbunden.

Der im Schiebebetrieb als Pumpe wirkende Hydromotor baut aufgrund dieser Drosselstelle einen Druck in seiner stromabwärts gelegenen Hauptleitung auf, wodurch sich die beabsichtigte Bremswirkung ergibt. Die Rückkehr des Bremsventils in seine Neutralstellung, in der die als Rücklaufleitung fungierende stromabwärtige Hauptleitung über eine Drosselstelle mit dem Tankvolumen verbunden ist, erfolgt allein auf Grund zweier Druckfedern, welche den Kolben des Bremsventils in eine Mittelstellung bringen.

Um bei einer starken Druckerhöhung in der stromabwärtigen Hauptleitung zu verhindern, dass der Druck in der Hauptleitung einen kritischen Druck übersteigt, sind zwei Druckbegrenzungsventile vorgesehen, über die die beiden Hauptleitungen beim Übersteigen eines Schwellwerts durch den Druck kurzgeschlossen werden.

Das beschriebene System hat den Nachteil, dass das Bremsventil durch die Kraft der rücktreibenden Federn in seine Mittelstellung gebracht wird und beim Bremsvorgang keine Regelung erfolgt. In dieser Mittelstellung ist ein bestimmter Drosselquerschnitt fest eingestellt, der die Bremswirkung erzeugt. Die Betätigung des Bremsventils erfolgt unabhängig von den in den Hauptleitungen auf Seiten des Hydromotors herrschenden Druckverhältnissen, so dass eine Regelung bezüglich der Last des Hydromotors nicht erfolgen kann.

Ein weiterer Nachteil ist, das zum Begrenzen des Drucks in der stromabwärtigen Hauptleitung ein Kurzschließen der beiden Hauptleitungen durchgeführt wird. Ein Teil des Druckmittels, das sich dabei im Umlauf befindet, durchströmt daher nicht das Tankvolumen und eventuell zusätzlich angeordnete Filter und Kühler.

Es ist Aufgabe der Erfindung, eine Regelung für ein hydrostatisches Getriebe in einem offenen Kreislauf zu schaffen, bei dem eine Bremswirkung in Abhängigkeit von dem von dem Hydromotor in seiner stromabwärtigen Hauptleitung erzeugten Druck bewirkt wird.

Die Aufgabe wird durch die erfindungsgemäße Regelung mit den Merkmalen des Patentanspruchs 1 gelöst.

Erfindungsgemäß wird durch eine Bremsventileinheit eine stromabwärts des Hydromotors angeordnete Hauptleitung im Schiebebetrieb mit einem Tankvolumen verbunden. Die Verbindung erfolgt gedrosselt, wobei die Drosselung abhängig davon ist, wie hoch der Druck in der stromabwärts des Hydromotors angeordneten Hauptleitung ist. Bei einem hohen Druck, also einer starken Pumpwirkung des Hydromotors, erfolgt eine lediglich leichte Drosselung. Eine solche leichte Drosselung wird dementsprechend nur als geringe Bremswirkung empfunden, so dass der heftige Bremsruck, wie er bei einer konstanten Drosselung auftritt, entfällt.

Die Unteransprüche betreffen vorteilhafte Weiterbildungen des erfindungsgemäßen hydrostatischen Getriebes.

Besonders vorteilhaft ist es dabei, die Bremsventileinheit so auszubilden, dass sie zusätzlich zu der Beaufschlagung durch den in der stromabwärts des Hydromotors angeordneten motorseitigen Hauptleitung herrschenden Druck auch mit dem Förderdruck der Hydropumpe beaufschlagt wird. Dadurch wird während des normalem Fahrbetriebs die stromabwärts des Hydromotors angeordnete motorseitige Hauptleitung ebenfalls mit dem Tankvolumen verbunden. Durch eine entsprechende Wahl der mit Druck beaufschlagten Messflächen ist es dabei möglich, für den normalem Fahrbetrieb einen nahezu ungedrosselten Rücklauf des Druckmittels zum Tankvolumen hin zu ermöglichen.

Besonders vorteilhaft ist es weiterhin, eine Bremsventileinheit vorzusehen, die eine Ruheposition aufweist, in der eine Strömung von Druckmittel vom Hydromotor her kommend in Richtung des Tankvolumens nicht möglich ist. Durch eine solche vollständige Unterbrechung der Möglichkeit des Rückströmens wird beispielsweise ein Fahrzeug, welches an einem Hang steht, daran gehindert, selbständig loszurollen.

Für einen hydrostatischen Antrieb, dessen Fahrtrichtungsventil eine Leerlaufposition aufweist, ist es weiterhin besonders vorteilhaft, wenn in der Leerlaufposition sowohl die Hauptleitung stromaufwärts des Hydromotors als auch die Hauptleitung stromabwärts des Hydromotors mit dem Tankvolumen verbunden sind.

Bevorzugte Ausführungsbeispiele der erfindungsgemäßen Regelung für ein hydrostatisches Getriebe sind in der Zeichnung dargestellten und werden anhand der nachfolgenden Beschreibung näher erläutert. Es zeigen:
- Fig. 1: ein erstes Ausführungsbeispiel für einen Schaltplan einer erfindungsgemäßen Regelung,
- Fig. 2: ein zweites Ausführungsbeispiel für einen Schaltplan einer erfindungsgemäßen Regelung,
- Fig. 2a: ein modifiziertes Bremsventil,
- Fig. 3: ein drittes Ausführungsbeispiel für einen Schaltplan einer erfindungsgemäßen Regelung,
- Fig. 4: ein viertes Ausführungsbeispiel für einen Schaltplan einer erfindungsgemäßen Regelung,
- Fig. 5: ein fünftes Ausführungsbeispiel für einen Schaltplan einer erfindungsgemäßen Regelung eines hydrostatischen Getriebes,
- Fig. 5a: ein modifiziertes Bremsventil des Ausführungsbeispiels aus Fig. 5, und
- Fig. 6: ein sechstes Ausführungsbeispiel für einen Schaltplan einer erfindungsgemäßen Regelung.

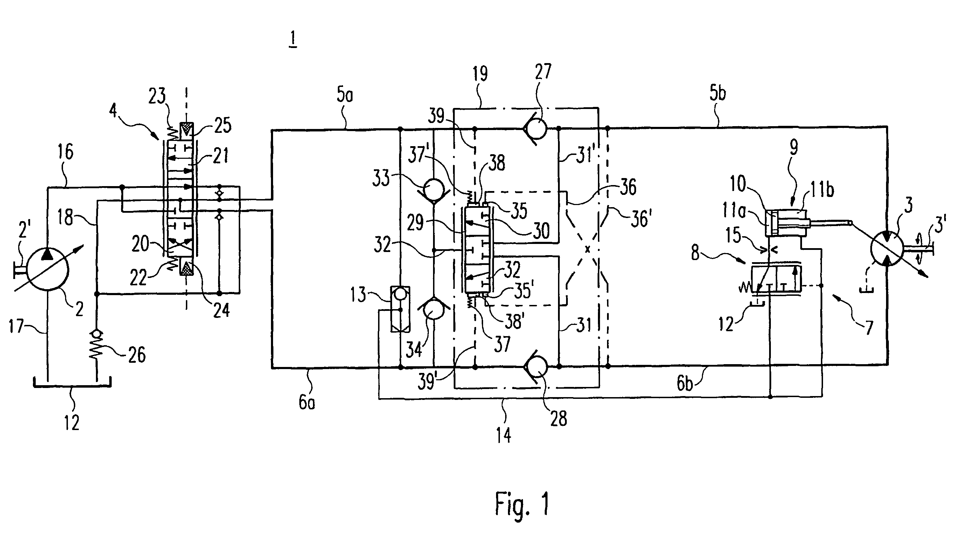

Fig. 1 zeigt ein erstes Ausführungsbeispiel für einen Schaltplan einer erfindungsgemäßen Regelung eines hydrostatischen Getriebes 1. Das hydrostatische Getriebe 1 umfasst eine Hydropumpe 2, welche im dargestellten Ausführungsbeispiel mit einem einstellbaren Fördervolumen betrieben werden kann. Das von der Hydropumpe 2 geförderte Druckmittel treibt einen Hydromotor 3 an, dessen Schluckvolumen ebenfalls einstellbar ist.

Zur Bestimmung der Drehrichtung des Hydromotors 3 ist die Hydropumpe 2, die für die Förderung lediglich in einer Richtung vorgesehen ist, über ein Fahrtrichtungsventil 4 mit einer ersten pumpenseitigen Hauptleitung 5a oder einer zweiten pumpenseitigen Hauptleitung 6a verbunden. Abhängig von der jeweiligen Fahrsituation wird die erste pumpenseitige Hauptleitung 5a mit der ersten motorseitigen Hauptleitung 5b verbunden. Wird die erste pumpenseitige Hauptleitung 5a über das Fahrtrichtungsventil 4 mit der Hydropumpe 2 verbunden, wie dies später noch detailliert ausgeführt wird, so wird durch die Hydropumpe 2 die erste pumpenseitige Hauptleitung 5a und darüber auch die erste motorseitige Hauptleitung 5b von der Hydropumpe 2 bedrückt. Das Druckmittel treibt infolgedessen den Hydromotor 3 an und strömt stromabwärts des Hydromotors 3 über die zweite motorseitige Hauptleitung 6b und die zweite pumpenseitige Hauptleitung 6a in Richtung eines Tankvolumens 12 zurück.

Zum Einstellen des veränderlichen Schluckvolumens des Hydromotors 3 ist eine Verstellvorrichtung 7 vorgesehen, welche im wesentlichen aus einem Stellventil 8 und einer Stelleinheit 9 besteht. Die Stelleinheit 9 umfasst einen Zylinder, in dem ein Stellkolben 10 angeordnet ist, der den Zylinder in einem ersten Druckraum 11a und einen zweiten Druckraum 11b unterteilt. Zwischen der ersten pumpenseitigen Hauptleitung 5a und der zweiten pumpenseitigen Hauptleitung 6a ist ein Wechselventil 13 angeordnet, durch das in einer Stelldruckzuleitung 14 jeweils der höhere der in den pumpenseitigen Hauptleitungen 5a, 6a herrschenden Drücke anliegt. Die Stelldruckzuleitung 14 ist mit dem zweiten Druckraum 11b verbunden. Zudem ist die Stelldruckzuleitung 14 mit einem Eingang des Stellventils 8 verbunden. Der Eingang des Stellventils 8 wird bei größer werdendem Druck in der Stelldruckzuleitung 14 über eine Drossel 15 mit dem ersten Druckraum 11a verbunden. Sind die Drücke in dem ersten Druckraum 11a und dem zweiten Druckraum 11b angeglichen, so wirkt auf den Stellkolben 10 eine resultierende Kraft, da die Kolbenfläche in dem ersten Druckraum 11a größer ist als in dem zweiten Druckraum 11b.

Sinkt der Druck in der Stelldruckzuleitung 14 dagegen ab, so wird das Stellventil 8 in entgegengesetzter Richtung durch die Kraft einer Druckfeder, welche dem Druck der Stelldruckzuleitung 14 entgegengerichtet wirkt, verstellt, wobei der erste Druckraum 11a zunehmend mit dem Tankvolumen 12 verbunden wird. Während des normalen Betriebs bedeutet dies, dass zum Beispiel während des Anfahrvorgangs, während dem der in der ersten pumpenseitigen Hauptleitung 5a herrschende Druck stark erhöht ist, der Hydromotor 3 in Richtung maximalen Schluckvolumens und damit maximalen Drehmoments verstellt wird. Reduziert sich durch zunehmende Geschwindigkeit des Fahrzeugs nach dem Anfahrvorgang der Druck in der ersten pumpenseitigen Hauptleitung 5a, so sinkt damit auch der Druck in der Stelldruckzuleitung 14. Dieser abnehmende Druck in der Stelldruckzuleitung 14 bewirkt eine Verstellung des Stellventils 8 und damit eine Entspannung des ersten Druckraums 11a in das Tankvolumen 12, so dass der Hydromotor 3 in Richtung kleineren Schluckvolumens verschwenkt wird bis sich ein Gleichgewichtszustand einstellt.

Die Hydropumpe 2 fördert das Druckmittel in eine Druckleitung 16, wobei die Druckleitung 16 über das Fahrtrichtungsventil 4 mit der ersten pumpenseitigen Hauptleitung 5a oder der zweiten pumpenseitigen Hauptleitung 6a verbunden werden kann. Ausgehend von der in der Fig. 1 dargestellten Ruheposition ist das Fahrtrichtungsventil 4 hierzu in eine erste oder zweite Schaltposition 20 bzw. 21 schaltbar. Die Ruheposition des Fahrtrichtungsventils 4 wird durch eine erste Druckfeder 22 und eine zweite Druckfeder 23 bestimmt, die das Fahrtrichtungsventil 4 in einer Mittelstellung halten. Um entsprechend der gewünschten Förderrichtung die erste pumpenseitige Hauptleitung 5a oder die zweite pumpenseitige Hauptleitung 6a die Druckleitung 16 mit der entsprechenden pumpenseitigen Hauptleitung 5a oder 6a zu verbinden, ist ein erster Schaltmagnet 24 bzw. ein zweiter Schaltmagnet 25 vorgesehen. Für die weiteren Ausführungen zur Funktion einer Bremsventileinheit 19 sei angenommen, dass sich das Fahrtrichtungsventil 4 in seiner ersten Schaltposition 20 befindet, in der die Druckleitung 16, in die die Hydropumpe 2 das über eine Saugleitung 17 aus dem Tankvolumen 12 angesaugte Druckmittel pumpt, mit der ersten pumpenseitigen Hauptleitung 5a verbindet.

Gleichzeitig wird durch das Fahrtrichtungsventil 4 in der ersten Schaltposition 20 die zweite pumpenseitige Hauptleitung 6a mit einer Tankleitung 18 verbunden, welche die zweite pumpenseitige Hauptleitung 6a über ein federbelastetes Rückschlagventil 26 mit dem Tankvolumen 12 verbindet.

In dem dargestellten ersten Ausführungsbeispiel in Fig. 1 wird durch die Bremsventileinheit 19 die erste pumpenseitige Hauptleitung 5a mit der ersten motorseitigen Hauptleitung 5b über ein erstes Rückschlagventil 27 verbunden. Das erste Rückschlagventil 27 ist so angeordnet, dass es in Richtung des Hydromotors 3 öffnet. Weiterhin ist ein zweites Rückschlagventil 28 vorgesehen, welches ebenfalls in Richtung des Hydromotors 3 öffnet, und welches daher bei der beschriebenen Förderrichtung in seiner geschlossenen Position ist, so dass ein direktes Zurückfließen des Druckmittels über die zweite motorseitige Hauptleitung 6b in die zweite pumpenseitige Hauptleitung 6a nicht möglich ist.

Eine Rückflussmöglichkeit des geförderten Druckmittels aus der zweiten motorseitigen Hauptleitung 6b in Richtung des Tankvolumens 12 wird über ein Bremsventil 29 ermöglicht. Das Bremsventil 29 verbindet hierzu in einer ersten Endposition 30 eine erste Zweigleitung 31 der zweiten motorseitigen Hauptleitung 6b mit einer Rücklaufverbindungsleitung 32. Die Rücklaufverbindungsleitung 32 ist über ein erstes Rücklaufrückschlagventil 33 mit der ersten pumpenseitigen Hauptleitung 5a und über ein zweites Rücklaufrückschlagventil 34 mit der zweiten pumpenseitigen Hauptleitung 6a verbunden. Das erste Rücklaufrückschlagventil 33 und das zweite Rücklaufrückschlagventil 34 sind jeweils so angeordnet, dass sie in Richtung der ersten pumpenseitigen Hauptleitung 5a bzw. der zweiten pumpenseitigen Hauptleitung 6a öffnen.

Eine erste Messfläche 35 des Bremsventils 29 ist über eine erste Bremsdruckleitung 36 mit der zweiten motorseitigen Hauptleitung 6b verbunden. Auf die erste Messfläche 35 wirkt damit eine hydraulische Kraft, welche durch den Druck, der in der zweiten motorseitigen Hauptleitung 6b herrscht, bestimmt ist. Die erste Messfläche 35 ist so orientiert, dass die dort wirkende hydraulische Kraft das Bremsventil 29 aus seiner Ruheposition entgegen der Kraft einer ersten Zentrierfeder 37 in Richtung der ersten Endposition 30 auslenkt.

Zusätzlich ist an dem Bremsventil 29 eine zweite Messfläche 38 ausgebildet, die durch eine erste Druckentnahmeleitung 39 mit der ersten pumpenseitigen Hauptleitung 5a verbunden ist. Die erste Messfläche 35 und die zweite Messfläche 38 sind gleichsinnig an dem Bremsventil 29 ausgebildet, so dass sowohl die an der ersten Messfläche 35 wirkende hydraulische Kraft als auch die an der größeren zweiten Messfläche 38 wirkende hydraulische Kraft das Bremsventil 29 in Richtung seiner ersten Endposition 30 auslenken. Der Übergang zwischen der Ruheposition des Bremsventils 29 und der ersten Endposition 30 ist dabei kontinuierlich, so dass das Bremsventil 29 in Abhängigkeit von dem an der ersten Messfläche 25 bzw. der zweiten Messfläche 38 anliegenden Druck eine einstellbare Drossel bildet.

In der Ruheposition des Bremsventils 29 ist die Verbindung zwischen der ersten Zweigleitung 31 der zweiten motorseitigen Hauptleitung 6b und der Rücklaufverbindungsleitung 32 vollständig unterbrochen, während in der ersten Endposition 30 des Bremsventils 29 eine nahezu ungedrosselte Verbindung aus der ersten Zweigleitung 31 in die Rücklaufverbindungsleitung 32 erfolgt.

In der beschriebenen ersten Schaltposition 20 des Fahrtrichtungsventils 4 ist während einer normalen Fahrsituation, in der ein Fahrzeug über das hydrostatische Getriebe 1 beschleunigt oder in der Ebene gefahren wird, die erste pumpenseitige Hauptleitung 5a sowie die erste motorseitige Hauptleitung 5b bedrückt, und der Hydromotor 3 wird angetrieben. Die stromabwärts des Hydromotors 3 angeordnete zweite motorseitige Hauptleitung 6b wird dagegen über das Bremsventil 29 in Richtung des Tankvolumens 12 entspannt. Hierzu ist das Bremsventil 29 durch den über die erste Druckentnahmeleitung 39 auf die zweite Messfläche 38 wirkenden Förderdruck der Hydropumpe 2 in seine erste Endposition 30 gebracht und verbindet so die erste Zweigleitung 1 mit der Rücklaufverbindungsleitung 32. Infolgedessen öffnet das zweite Rücklaufrückschlagventil 34 und gibt somit den Strömungsweg für das zurückströmende Druckmittel über die zweite pumpenseitige Hauptleitung 6a sowie das Fahrtrichtungsventil 4, die Tankleitung 18 und dass federbelastete Rückschlagventil 26 frei. Das Rückschlagventil 26 stellt dabei einen geringen Restdruck im Leitungssystem sicher.

Ergibt sich nun eine Fahrsituation, beispielsweise bei einer Bergabfahrt oder beim Bremsen, in der das Fahrzeug nicht durch den Hydromotor 3 angetrieben wird, sondern umgekehrt das Fahrzeug den Hydromotor 3 im Sinne einer Pumpe betreibt, so sinkt der Druck in der ersten pumpenseitigen Hauptleitung 5a. Mit dem in der ersten pumpenseitigen Hauptleitung 5a sinkenden Druck sinkt gleichzeitig auch die hydraulische Kraft, die an der zweiten Messfläche 38 auf das Bremsventil 29 wirkt, so dass das Bremsventil 29 durch die Kraft der ersten Zentrierfeder 37 in Richtung seiner Ruheposition bewegt wird. Durch das Verstellen des Bremsventils 29 in Richtung seiner Ruheposition wird Verbindung der ersten Zweigleitung 31 zu der Rücklaufverbindungsleitung 32 zunehmend gedrosselt. Diese zunehmende Drosselung setzt dem zurückströmenden Druckmittel einen immer größer werdenden Strömungswiderstand entgegen, der folglich zu einer Erhöhung des Drucks in der stromabwärts des Hydromotors 3 gelegenen zweiten motorseitigen Hauptleitung 6b führt.

Dieser mit zunehmender Drosselung höher werdende Druck in der zweiten motorseitigen Hauptleitung 6b setzt sich über die erste Bremsdruckleitung 36 bis zu der ersten Messfläche 35 fort und wirkt dort wiederum entgegen der ersten Zentrierfeder 37. Da die Fläche der ersten Messfläche 35 kleiner ist als die Fläche der zweiten Messfläche 38, wird lediglich eine gedrosselte Verbindung zwischen der ersten Zweigleitung 31 und der Rücklaufverbindungsleitung 32 geöffnet. Durch diese gedrosselte Verbindung muss der als Pumpe betriebene Hydromotor 3 Arbeit verrichten, um das Druckmittel in Richtung des Tankvolumens 12 zu befördern, wodurch die erwünschte Bremswirkung erreicht wird.

Da die Drosselung, die in dem Bremsventil 29 durchgeführt wird, abhängig von der Höhe des an der ersten Messfläche 35 anliegenden Drucks ist, wird nicht nur eine Verbesserung des Komforts während des Bremsens erreicht, sondern auch die Verwendung zusätzlicher Druckbegrenzungsventile überflüssig. Ihre Verwendung kann allenfalls aus Sicherheitsgründen zusätzlich erfolgen.

Diese Funktion wird ebenfalls bereits durch das Bremsventil 29 übernommen, da mit steigendem Druck in der stromabwärts des Hydromotors 3 gelegenen zweiten motorseitigen Hauptleitung 6b ein größerer durchströmbarer Querschnitt durch das Bremsventil 29 freigegeben wird.

Darüber hinaus ermöglicht eine entsprechende Auslegung der Federrate der ersten Zentrierfeder 37 und der Größe der ersten Messfläche 35, dass, solange ein bestimmter Schwellwert für den Druck in der zweiten motorseitigen Hauptleitung 6b nicht überschritten wird, die Verbindung zwischen der ersten Zweigleitung 31 und der Rücklaufverbindungsleitung 32 vollständig unterbrochen ist. Dies ermöglicht z. B. ein Abstellen des Fahrzeugs an einem Hang, so dass es sich im Gegensatz zu einer fest eingestellten Drossel nicht selbsttätig in Bewegung setzen kann, da der als Pumpe arbeitende Hydromotor 3 auf Grund der Leitungsunterbrechung blockiert ist.

Die vorstehenden Ausführungen zu einer Strömungsrichtung aus der ersten pumpenseitigen Hauptleitung 5a über die erste motorseitige Hauptleitung 5b durch den Hydromotor 3 und zurück über die zweite motorseitige Hauptleitung 6b und die zweite pumpenseitige Hauptleitung 6a in das Tankvolumen 12 treffen in analoger Weise auch auf eine umgekehrte Förderrichtung zu, wie sie bei Umkehr der Fahrtrichtung auftritt. Das Fahrtrichtungsventil 4 ist dabei durch den zweiten Schaltmagnet 25 in seine zweite Schaltposition 21 gebracht. In diesem Fall strömt während des normalen Fahrbetriebs das Druckmittel über das zweite Rückschlagventil 28 zu dem Hydromotor 3 hin, wobei über die zweite Druckentnahmeleitung 39' eine dritte Messfläche 38' des Bremsventils 29 entgegen einer zweiten Zentrierfeder 37' mit einer hydraulischen Kraft beaufschlagt wird. Durch die resultierende Auslenkung des Bremsventils 29 wird eine zweite Zweigleitung 31' der ersten motorseitigen Hauptleitung 5b mit der Rücklaufverbindungsleitung 32 verbunden, wenn sich das Bremsventil 29 in seiner zweiten Endposition 32 befindet. Die Verbindung erfolgt nahezu ungedrosselt.

Gerät das Fahrzeug bei der zuletzt beschriebenen Förderrichtung in den Schiebebetrieb, so wird eine vierte Messfläche 35' des Bremsventils 29, die kleiner ist als die dritte Meßläche 38', mit dem entsprechend gestiegenen Druck in der nunmehr stromabwärts der Hydropumpe 3 gelegenen ersten motorseitigen Hauptleitung 5b beaufschlagt, so dass das Bremsventil 29 wiederum einen gedrosselten Querschnitt in Richtung des Tankvolumens 12 freigibt, über den ein Rücklauf des Druckmittels aus der ersten motorseitigen Hauptleitung 5b über die zweite Zweigleitung 31' erfolgt. Zum Beaufschlagen der vierten Messfläche 35' mit einem Druck ist die erste motorseitige Hauptleitung 5b über eine zweite Bremsdruckleitung 36' mit der vierten Messfläche 35' verbunden.

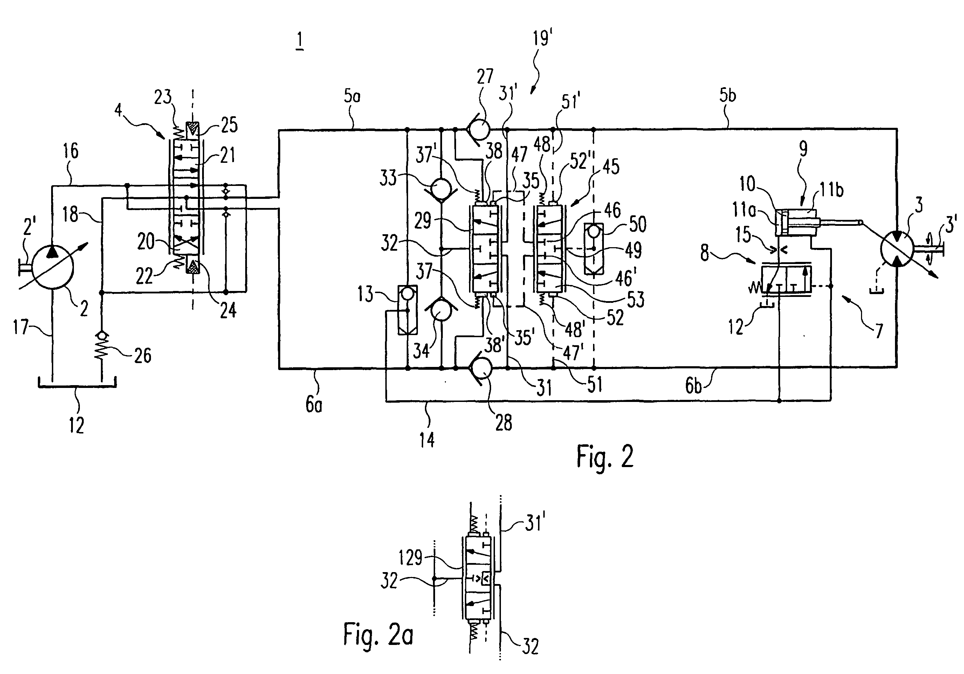

In Fig. 2 ist ein weiteres Ausführungsbeispiel mit einer alternativen Ausführung einer Bremsventileinheit 19' dargestellt. Der Aufbau des hydrostatischen Getriebes 1 entspricht im wesentlichen dem Aufbau des in Fig. 1 dargestellten hydrostatischen Getriebes, so dass gleiche Elemente mit gleichen Bezugszeichen versehen sind. Im Unterschied zu der in Fig. 1 erläuterten Ausführungsform wird jedoch das Bremsventil 29 an seiner ersten Messfläche 35 sowie seiner vierten Messfläche 35' nicht direkt aus der zweiten motorseitigen Hauptleitung 6b bzw. der ersten motorseitigen Hauptleitung 6a mit einem Druck beaufschlagt. Zum Steuern des an der ersten Messfläche 35 und der vierten Messfläche 35' herrschenden Drucks dient hier ein Vorsteuerventil 45, welches einen ersten Ausgang 46 aufweist, der mit der ersten Messfläche 35' über einen ersten Bremsdruckleitungsabschnitt 47 verbunden ist. Mit der vierten Messfläche 35' ist ein zweiter Ausgang 46' des Vorsteuerventils 45 über einen zweiten Bremsdruckleitungsabschnitt 47' verbunden.

Das Vorsteuerventil 45 wird durch zwei Rückstellfedern 48, 48' in seiner Ruhestellung gehalten, in der der erste und zweite Ausgang 46 und 46' getrennt von einem Eingang 49 des Vorsteuerventils 45 sind. Der Eingang 49 des Vorsteuerventils 45 ist über ein Wechselventil 50 mit der ersten motorseitigen Hauptleitung 5b und der zweiten motorseitigen Hauptleitung 6b verbunden, so dass an dem Eingang 49 jeweils der Höhere der Drücke der ersten motorseitigen Hauptleitung 5b und der zweiten motorseitigen Hauptleitung 6b herrscht.

Befindet sich das Fahrtrichtungsventil 4 in seiner ersten Schaltposition 20, wobei das angetriebene Fahrzeug sich im Schiebebetrieb befindet, so ist, wie dies unter Bezugnahme auf Fig. 1 bereits ausgeführt wurde, das erste Rückschlagventil 27 aufgrund des Förderdrucks der Hydropumpe 2 geöffnet, wohingegen das zweite Rückschlagventil 28 geschlossen ist. Wegen des Schiebebetriebs und des deshalb als Pumpe wirkenden Hydromotors 3 steigt der Druck in der zweiten motorseitigen Hauptleitung 6b an und das Wechselventil 50 befindet sich in seiner in der Fig. 2 dargestellten Position. An dem Eingang 49 des Vorsteuerventils 45 wirkt daher der erhöhte Druck der zweiten motorseitigen Hauptleitung 6b.

Gleichzeitig wird über einen ersten Bremsdruckmessleitungsabschnitt 51 eine erste Bremsdruckmessfläche 52 des Vorsteuerventils 45 mit einer hydraulischen Kraft entsprechend dem in der zweiten motorseitigen Hauptleitung 6b herrschenden Druck beaufschlagt, so dass das Vorsteuerventil 45 aus seiner Ruheposition in Richtung einer ersten Steuerposition 53 ausgelenkt wird. In Abhängigkeit von der hydraulischen Kraft an der ersten Bremsdruckmessfläche 52 sowie der entgegengerichteten Kraft der ersten Rückstellfeder 48 öffnet das Vorsteuerventil 45 kontinuierlich eine durchströmbare Verbindung von dem Eingang 49 zu dem ersten Ausgang 46. Erreicht das Vorsteuerventil 45 seine erste Steuerpositon 53, so ist die Verbindung vollkommen geöffnet, so dass an der ersten Messfläche 35 des Bremsventils 29 der Druck der zweiten motorseitigen Hauptleitung 6b anliegt.

Das Vorsteuerventil 45 ist wiederum symmetrisch aufgebaut, so dass es bei umgekehrter Strömungsrichtung eine analoge Funktion aufweist. Hierzu ist an dem Vorsteuerventil 45 eine zweite Bremsdruckmessfläche 52' ausgebildet, welche mit der ersten motorseitigen Hauptleitung 5b über einen zweiten Bremsdruckmessleitungsabschnitt 51' verbunden ist. Übersteigt bei entgegengesetzter Strömungsrichtung der Druck in der ersten motorseitigen Hauptleitung 5b den Druck in der zweiten motorseitigen Hauptleitung 6b, so ist der Eingang 49 des Vorsteuerventils 45 über das Wechselventil 50 mit der ersten motorseitigen Hauptleitung 5b verbunden.

Die Funktion und der Aufbau des Bremsventils 29 ist identisch mit der Funktion und dem Aufbau des Bremsventils 29 aus Fig. 1. Durch die Verwendung des Vorsteuerventils 45 ist es jedoch möglich, den an den Messflächen 35 und 35' anliegenden Bremsdruck zu beeinflussen. Insbesondere kann vorteilhaft der zeitliche Verlauf an die jeweiligen Einsatzbedingungen des Fahrzeugs und das Fahrzeug selbst angepasst werden.

An Stelle des Bremsventils 29, wie es in den Ausführungsbeispielen der Fig. 1 und Fig. 2 beschrieben ist, kann in beiden Ausführungsbeispielen besonders vorteilhaft auch ein modifiziertes Bremsventil 129 verwendet werden. Das modifizierte Bremsventil 129 ist in Fig. 2a dargestellt. Befindet sich das modifizierte Bremsventil 129 in seiner Ruheposition, so ist die erste Zweigleitung 31 gedrosselt mit der zweiten Zweigleitung 31' verbunden. Durch die gedrosselte Verbindung wird die Regelstabilität des Systems verbessert.

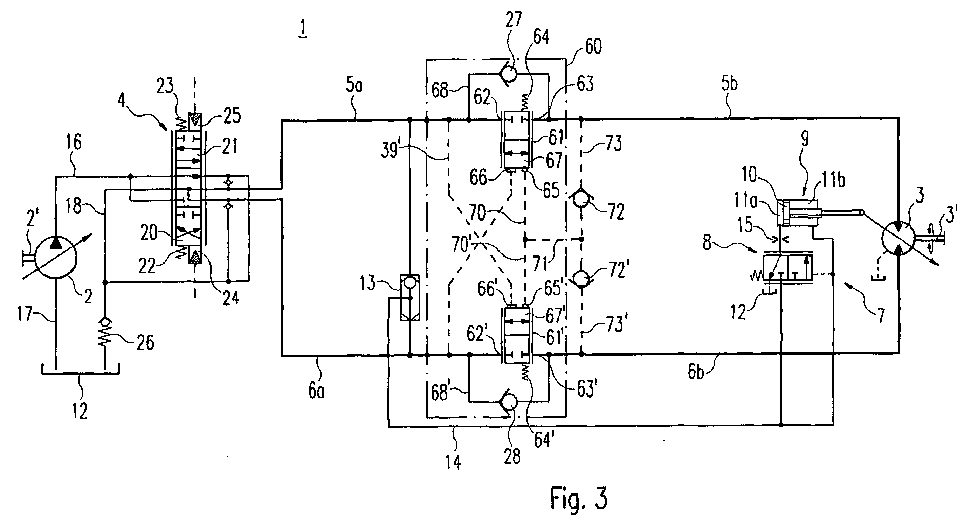

Eine weitere Ausführungsform der erfindungsgemäßen Regelung ist in dem hydraulischen Schaltplan der Fig. 3 dargestellt. Eine darin vorgesehene Bremsventileinheit 60 besteht im wesentlichen aus einem ersten Bremsventil 61 sowie einem zweiten Bremsventil 61'. Die nachfolgenden, lediglich auf das erste Bremsventil 61 bezogenen Ausführungen treffen in analoger Weise auch auf das zweite Bremsventil 61' zu, wobei sich entsprechende Bezugszeichen als apostrophierte Bezugszeichen in Zusammenhang mit dem zweiten Bremsventil 61' verwendet werden.

Das erste Bremsventil 61 besitzt einen ersten Anschluss 62 sowie einen zweiten Anschluss 63 auf, die in der Ruheposition des ersten Bremsventils 61 keine durchstömbare Verbindung haben. Das erste Bremsventil 61 wird durch eine Feder 64 in der Ruheposition gehalten, solange an seiner ersten Messfläche 65 oder seiner größeren zweiten Messfläche 66 kein Druck anliegt, der das Bremsventil 61 entgegen der Kraft der Feder 64 aus seiner Ruheposition in Richtung einer Endposition 67 auslenkt. Die erste pumpenseitige Hauptleitung 5a ist über ein erstes Rückschlagventil 27, welches in einer Bypassleitung 68 angeordnet ist, mit der ersten motorseitigen Hauptleitung 5b verbunden. Befindet sich das Fahrtrichtungsventil 4 in seiner bereits erläuterten ersten Schaltposition 20, so wird von der Hydropumpe 2 die erste pumpenseitige Hauptleitung 5a bedrückt, wobei sich der Druck über die Bypassleitung 68 und das in Richtung des Hydromotors 3 öffnende erste Rückschlagventil 27 zu der ersten motorseitigen Hauptleitung 5b fortsetzt.

Der in der ersten pumpenseitigen Hauptleitung 5a herrschende Druck wirkt auf die zweite Messfläche 66' des zweiten Bremsventils 61', wozu die zweite Messfläche 66' des zweiten. Bremsventils 61' über eine dritte Druckentnahmeleitung 39' mit der ersten motorseitigen Hauptleitung 5a verbunden ist. Der auf die zweite Messfläche 66' des zweiten Bremsventils 61' wirkende Förderdruck der Hydropumpe 2 lenkt das Ventil entgegen der Kraft der Feder 64' aus seiner Ruheposition in Richtung seiner Endposition 67' aus.

In der Endposition 67' des zweiten Bremsventils 61' ist die zweite motorseitige Hauptleitung 6b mit der zweiten pumpenseitigen Hauptleitung 6a verbunden und trotz des geschlossenen zweiten Rückschlagventils 28 der Bypassleitung 68' ist ein Rückfluss des durch den Hydromotor 3 geförderten Druckmittels in Richtung des Tankvolumens 12 möglich.

Gerät das hydrostatische Getriebe 1 auf Grund eines Bremsvorgangs in den Schiebebetrieb, in dem der Hydromotor 3 als Pumpe wirkt, so sinkt der Druck in der ersten pumpenseitigen Hauptleitung 5a. Dementsprechend erfolgt eine stärkere Drosselung durch das zweite Bremsventil 61', welches entgegen der nachlassenden hydraulischen Kraft, die auf die zweite Messfläche 66' wirkt, durch die Feder 64' in Richtung seiner Ruheposition verstellt wird. Die stärkere Drosselung bewirkt gleichzeitig einem Druckanstieg in der zweiten motorseitigen Hauptleitung 6b. Der gestiegene Druck in der zweiten motorseitigen Hauptleitung 6b wird über einen Bremsleitungsabschnitt 70' an die erste Messfläche 65' des zweiten Bremsventils 61' weitergeleitet. Hierzu ist der Bremsleitungsabschnitt 70' über eine Verbindungsleitung 71 mit einer Entnahmeleitung 73' verbunden, in der ein in Richtung des zweiten Bremsventils 61' öffnendes Rückschlagventil 72' angeordnet ist. Die gleichzeitige Änderung der an den Messflächen anliegenden Drücke wird besonders vorteilhaft verwendet, um ein sanftes Einleiten des Bremsvorgangs zu ermöglichen. Hierzu werden die Verhältnisse der Flächen und die Federrate der entgegengesetzt wirkenden Feder bei allen verwendeten Bremsventilen aufeinander abgestimmt.

Die somit auf die erste Messfläche 65' des zweiten Bremsventils 61' wirkende hydraulische Kraft lenkt das Bremsventil 61' aus seiner Ruheposition in Richtung der Endposition 67' aus, so dass zwischen der zweiten motorseitigen Hauptleitung 6b und der zweiten pumpenseitigen Hauptleitung 6a eine gedrosselte Verbindung hergestellt wird. Der pumpende Hydromotor 3 verrichtet an der Drosselstelle Arbeit, wobei die Intensität der Drosselung von dem in der zweiten motorseitigen Hauptleitung 6b herrschenden Druck abhängig ist. Ein zu starker Anstieg des Drucks in der zweiten motorseitigen Hauptleitung 6b wird verhindert, da eine Druckerhöhung auch eine Erhöhung der hydraulischen Kraft an der ersten Messfläche 65' des Bremsventils 61' bewirkt und infolgedessen der Strömungsquerschnitt vergrößert wird.

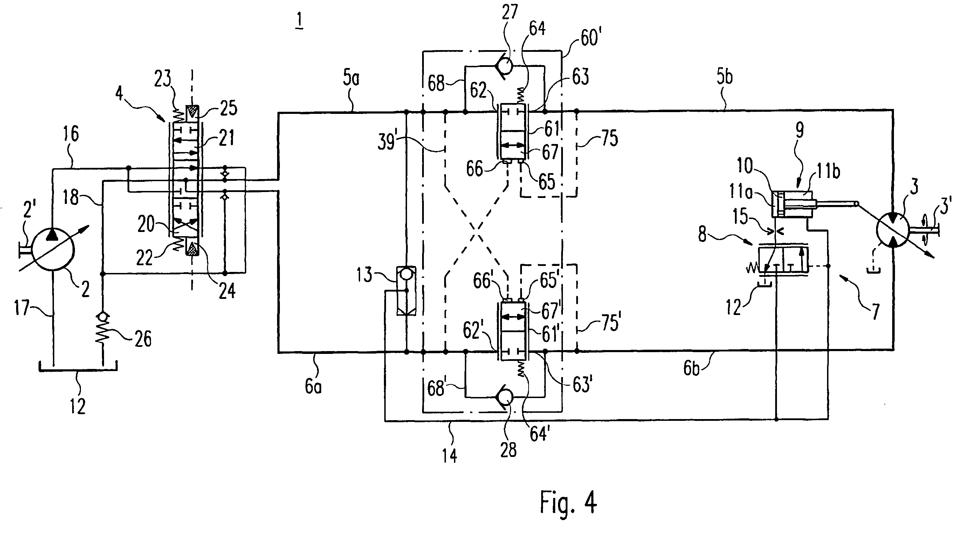

In Fig. 4 ist ein ähnliches Ausführungsbeispiel dargestellt, bei dem ein erstes Bremsventil 61 und ein zweites Bremsventil 61' vorgesehen sind. Im Unterschied zu dem Ausführungsbeispiel der Fig. 3 sind hier jedoch die ersten Messflächen 65 und 65' nicht über Rückschlagventile mit der ersten bzw. zweiten motorseitigen Hauptleitung 5b bzw. 6b verbunden. Stattdessen sind die erste Messfläche 65 über eine Verbindungsleitung 75 direkt mit der ersten motorseitigen Hauptleitung 5b und die erste Messfläche 65' des zweiten Bremsventils 61' über eine zweite Verbindungsleitung 75' direkt mit der zweiten motorseitigen Hauptleitung 6b verbunden.

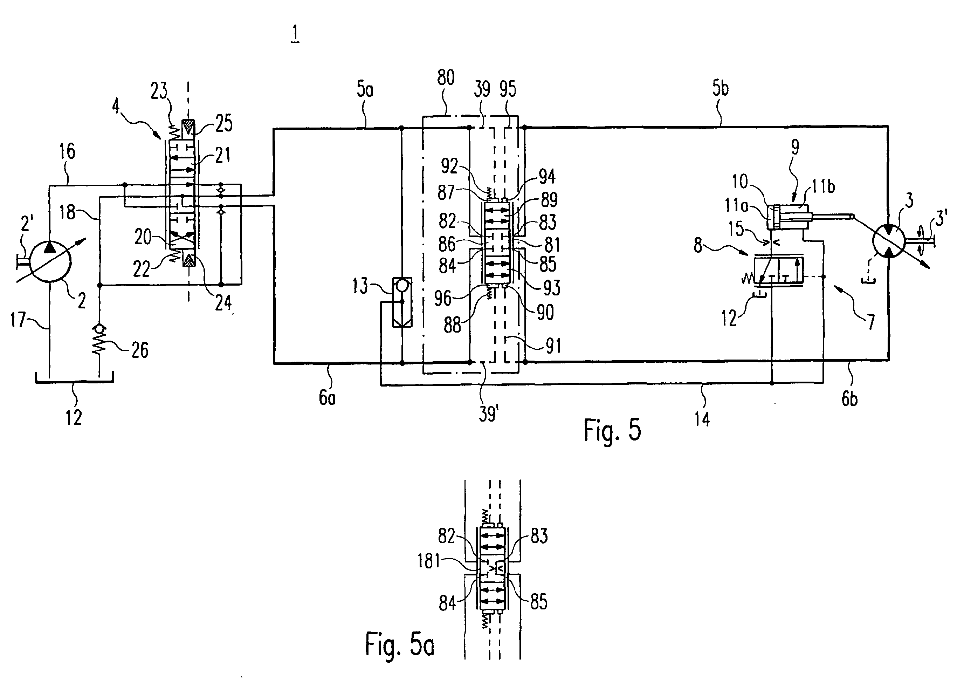

Ein hydraulischer Schaltplan für ein fünftes Ausführungsbeispiel der erfindungsgemäßen Regelung ist in Fig. 5 dargestellt. In dieser Ausführungsform umfasst die Bremsventileinheit 80 ein Bremsventil 81. Das Bremsventil 81 weist einen ersten Anschluss 82 auf, an dem die erste pumpenseitige Hauptleitung 5a angeschlossen ist. Ein zweiter Anschluss 83 des Bremsventils 81 ist mit der ersten motorseitigen Hauptleitung 5b verbunden. Entsprechend ist ein dritter Anschluss 84 und ein vierter Anschluss 85 mit der zweiten pumpenseitigen Hauptleitung 6a bzw. der zweiten motorseitigen Hauptleitung 6b verbunden. Befindet sich das Bremsventil 81 in seiner Mittelstellung 86, so weisen die Anschlüsse 82 bis 85 keine Verbindung durch das Bremsventil 81 auf.

Wird durch die Hydropumpe 2 und das Fahrtrichtungsventil 4 die erste pumpenseitige Hauptleitung 5a bedrückt, so wird der Förderdruck der Hydropumpe 2 über die Druckentnahmeleitung 39 an eine zweite Messfläche 87 weitergeleitet. Die dort wirkende Kraft lenkt das Bremsventil 81 entgegen der Kraft der Druckfeder 88 in Richtung einer ersten Endposition 89 aus. In Abhängigkeit von der resultierenden Kraft der Druckfeder 88 und der entgegengesetzt gerichteten hydraulischen Kraft kann das Bremsventil 81 jede beliebige Zwischenposition einnehmen. Wie bei den anderen Bremsventilen der Ausführungsbeispiele der Figuren 1 bis 4 ist damit eine kontinuierliche Verstellung der Drosselung möglich.

In einer normalen Fahrsituation bei der z. B. die erste pumpenseitige Hauptleitung 5a durch die Hydropumpe 2 bedrückt wird, wird damit wiederum sowohl die erste pumpenseitige Hauptleitung 5a mit der ersten motorseitigen Hauptleitung 5b verbunden als auch die zweite motorseitige Hauptleitung 6b mit der zweiten pumpenseitigen Hauptleitung 6a, wobei auf Grund der auf die größere zweite Messfläche 87 wirkenden Kraft das Bremsventil 81 bis zu seiner Endposition 89 ausgelenkt wird, in der eine Drosselung vernachlässigbar ist.

Findet nun wiederum durch die Pumpwirkung des Hydromotors 3 eine Druckumkehr in den Hauptleitungen statt, so verringert sich der auf die zweite Messfläche 87 wirkende Druck und der auf eine erste Messfläche 90 wirkende Druck wird erhöht. Die erste Messfläche 90 ist hierzu über eine Verbindungsleitung 91 mit der zweiten motorseitigen Hauptleitung 6b verbunden. Die an der ersten Messfläche 90 angreifende hydraulische Kraft wirkt entgegen einer weiteren Druckfeder 92 und verstellt das Bremsventil 81 in Richtung seiner zweiten Endposition 93.

In der zweiten Endposition des Bremsventils 81 werden ebenfalls die erste motorseitige Hauptleitung 5b mit der ersten pumpenseitigen Hauptleitung 5a verbunden sowie die zweite motorseitige Hauptleitung 6b mit der zweiten pumpenseitigen Hauptleitung 6a. Auf Grund der Flächenverhältnisse der zweiten Messfläche 87 und der ersten Messfläche 90 ist die Auslenkung in Richtung der zweiten Endposition 93 bei Druckumkehr geringer, so dass lediglich eine gedrosselte Verbindung zwischen der zweiten motorseitigen Hauptleitung 6b und der zweiten pumpenseitigen Hauptleitung 6a erzeugt wird, welche die erwünschte Bremswirkung verursacht.

Zum Erzeugen einer Bremswirkung bei einer Umkehr der Strömungsrichtung in dem hydraulischen Kreislauf ist gleichsinnig orientiert zu der zweiten Messfläche 87 eine kleinere Messfläche 94 vorgesehen, welche über eine weitere Verbindungsleitung 95 mit der ersten motorseitigen Hauptleitung 5b verbunden ist. Um das Bremsventil 81 in Richtung seiner zweiten Endposition 93 zu bewegen, wenn von der Hydropumpe 2 die erste pumpenseitige Hauptleitung 6a bedrückt wird, ist eine dritte Messfläche 96 vorgesehen, welche über eine zweite Druckentnahmeleitung 39' aus der zweiten pumpenseitigen Hauptleitung 6a mit Druckmittel bedrückt wird.

Fig. 5a zeigt wiederum ein modifiziertes Bremsventil 181, welches in dem Ausführungsbeispiel der Fig. 5 anstelle des Bremsventils 81 einsetzbar ist. Bei dem modifizierten Bremsventil 181 sind der zweite Anschluss 83 und der vierte Anschluss 85 in der Ruhestellung des Bremsventils 181 gedrosselt miteinander verbunden. Die gedrosselte Verbindung bewirkt dabei eine Verbesserung der Regelstabilität.

Die Erfindung umfasst auch mögliche Kombinationen der in den einzelnen Ausführungsbeispielen in der Figuren 1 bis 5 dargestellten hydraulischen Schaltpläne. Insbesondere ist es für alle Ausführungen der Bremsventileinheit denkbar, die Beaufschlagung der jeweils kleineren Messflächen über ein Vorsteuerventil durchzuführen. Der in das Tankvolumen 12 zurückgeführte Druckmittelfluss wird vorzugsweise über einen nicht dargestellten Kühler geleitet, durch den auch bei großer Bremsleistung sichergestellt ist, dass sich das Druckmittel nicht bis zu einer kritischen Temperatur erwärmt. Der in den Figuren dargestellte Antrieb der Hydropumpe 2 erfolgt über eine Antriebswelle 2' mittels eines nicht dargestellten Antriebsmotors. An einer Antriebswelle 3' des Hydromotors 3 kann beispielsweise ein nachgeschaltetes mechanisches Getriebe eines anzutreibenden Fahrzeugs angeschlossen sein.

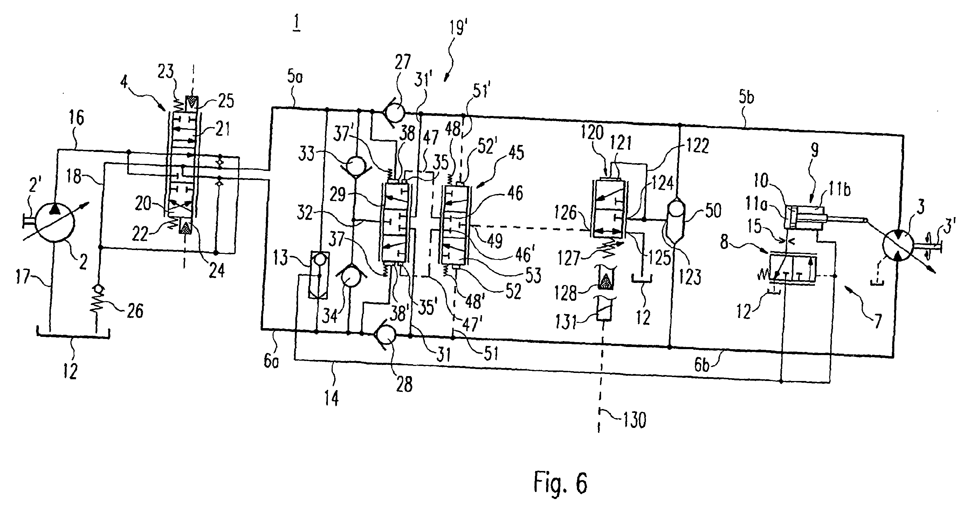

Das in der Fig. 6 dargestellte Ausführungsbeispiel basiert auf dem bereits ausführlich erläuterten Ausführungsbeispiel der Fig. 2. Um hinsichtlich der einzustellenden Bremsleistung eine erhöhte Flexibilität zu erreichen, ist der Eingang 49 des Vorsteuerventils 45 nunmehr nicht direkt mit dem Wechselventil 50 verbunden. Statt dessen ist zwischen dem Wechselventil 50 und dem Eingang 49 des Vorsteuerventils 45 ein Bremsdrucksteuerventil 120 angeordnet.

Das Bremsdrucksteuerventil 120 ist ein 3/2-Wegeventil. In Richtung seiner ersten Endposition wirkt an einer Messfläche 121 des Bremsdrucksteuerventils 120 eine hydraulische Kraft. Die Messfläche 121 des Bremsdrucksteuerventils 120 ist über eine Messleitung 122 mit einem Ausgang 123 des Wechselventils 50 verbunden. Weiterhin ist ein erster Eingang 124 des Bremsdrucksteuerventils 120 ebenfalls mit dem Ausgang 123 des Wechselventils 50 verbunden. Ein zweiter Eingang 125 ist dagegen mit dem Tankvolumen 12 verbunden.

Das Bremsdrucksteuerventil 120 weist zudem einen Ausgang 126 auf, der mit dem Eingang 49 des Vorsteuerventils 45 verbunden ist. In Abhängigkeit von den auf das Bremsdrucksteuerventil 120 wirkenden Kräften stellt sich eine Steuerposition des Bremsdrucksteuerventils 120 bei einem Kräftegleichgewicht ein. Das Bremsdrucksteuerventil 120 kann dabei beliebige Positionen zwischen der ersten Endposition, in der der erste Eingang 124 mit dem Ausgang 126 verbunden ist, und der zweiten Endposition, in der der zweite Eingang 125 mit dem Ausgang 126 verbunden ist, einnehmen. Während auf die Messfläche 121 des Bremsdrucksteuerventils 120 immer eine hydraulische Kraft wirkt, die proportional zu dem höheren in der ersten motorseitigen Hauptleitung 5b bzw. in der zweiten motorseitigen Hauptleitung 6b herrschenden Druck ist, kann die entgegengesetzt auf das Bremsdrucksteuerventil 120 wirkende Kraft eingestellt werden. Damit ist der an dem Eingang 49 des Vorsteuerventils 45 wirkende Druck stufenlos zwischen dem Druck des Tankvolumens 12 und dem höheren der in den motorseitigen Hauptleitungen 5b und 6b herrschenden Drücke einstellbar.

Das Bremsdrucksteuerventil 120 wird durch die hydraulische Kraft an der Messfläche 121 des Bremsdrucksteuerventils 120 so beaufschlagt, dass der Ausgang 126 zunehmend mit dem ersten Eingang 124 verbunden wird. Im einfachsten Fall wirkt in entgegengesetzter Richtung die Kraft einer Einstellfeder 127. Soll dagegen der an dem Eingang 49 des Vorsteuerventils 45 wirksame Druck besonders flexibel während des Betriebs einstellbar sein, so wird die der hydraulischen Kraft an der Messfläche 121 des Bremsdrucksteuerventils 120 entgegengesetzt gerichtete Kraft entweder hydraulisch an einer zweiten Messfläche 128 des Bremsdrucksteuerventils 120 oder elektrisch zum Beispiel mittels eines Proportionalmagneten 131 erzeugt.

Durch das Bremsdrucksteuerventil 120 wird der Druck, der an dem Eingang 49 des Vorsteuerventils 45 anliegt, gegenüber einer direkten Verbindung des Eingangs 49 mit dem Wechselventil 50 verringert. Durch diese Verringerung des Drucks wird auch die an der ersten Messfläche 35 bzw. der vierten Messfläche 35' des Bremsventils 29 wirkende Kraft reduziert. Eine Reduktion der auf die Messflächen 35 bzw. 35' wirkenden Kraft hat eine Erhöhung der Bremsleistung zur Folge, da, wie dies bei den Ausführungsbeispiel in der Fig. 1 bzw. Fig. 2 bereits erläutert wurde, mit zunehmendem Druck an der ersten Messfläche 35 bzw. der vierten Messfläche 35' des Bremsventils 29 die drosselnde Wirkung des Bremsventils 29 reduziert wird und umgekehrt.

Über das Bremsdrucksteuerventil 120 kann also die Bremsleistung erhöht werden, indem entweder der zweiten Messfläche 128 oder dem Proportionalmagneten 131 über eine entsprechende Signalleitung 130 entweder ein entsprechender Steuerdruck oder aber ein elektrisches Steuersignal zugeführt wird. Dieser Steuerdruck oder das Steuersignal können z. B. abhängig von der Betätigung eines nicht dargestellten Bremspedals oder aber von einer über einen Neigungssensor detektierten Neigung sein. Bei der Verwendung eines Neigungssensors wird vorzugsweise das Bremsdrucksteuerventil 120 über einen Proportionalmagneten 131 mit Hilfe eines elektrischen, von dem Neigungssensor erzeugten Signals eingestellt.

Eine weitere Anwendungsmöglichkeit ergibt sich bei der Verwendung eines 2-Gang-Getriebes. Dabei kann beispielsweise während des Schaltvorgangs der zum Schalten einer Getriebestufe verwendete Steuerdruck eingesetzt werden, um mittels des Bremsdrucksteuerventils 120 einen angepassten Bremsdruck zu erzeugen.

Der Vorteil des Ausführungsbeispiels nach Fig. 6 liegt in der Möglichkeit, die Bremsleistung stufenlos zu variieren und dabei die jeweilige Fahrsituation zu berücksichtigen.

## Patentansprüche

1. Regelung für ein hydrostatisches Getriebe in einem offenen Kreislauf umfassend eine Hydropumpe (2), die zur Förderung in eine erste pumpenseitige Hauptleitung (5a) oder eine zweite pumpenseitige Hauptleitung (6a) vorgesehen ist und einen Hydromotor (3), der mit einer ersten motorseitigen Hauptleitung (5b) und zweiten motorseitigen Hauptleitung (6b) verbunden ist, und umfassend eine Bremsventileinheit (19, 19', 60, 60', 80) über die die erste pumpenseitige Hauptleitung (5a) mit der ersten motorseitigen Hauptleitung (5b) und die zweite pumpenseitige Hauptleitung (6a) mit der zweiten motorseitigen Hauptleitung (6b) verbindbar sind,
**dadurch gekennzeichnet,**
**dass** mittels der Bremsventileinheit (19, 19', 60, 60', 80) die stromabwärts des Hydromotors (3) gelegene erste motorseitige Hauptleitung (5b) oder zweite motorseitige Hauptleitung (6b) in Abhängigkeit von dem darin herrschenden Druck mit einem Tankvolumen (12) gedrosselt verbindbar ist.

2. Regelung nach Anspruch 1,
**dadurch gekennzeichnet,**
**dass** die Bremsventileinheit (19, 19', 60, 60', 80) ein Bremsventil (29, 61, 61', 81) mit einer ersten Messfläche (35, 65, 90) umfasst, und das Bremsventil (29, 61, 61', 81) an der ersten Messfläche (35, 65, 90) entgegen einer Federkraft mit einem Bremsdruck beaufschlagt ist, der von dem in der stromabwärts des Hydromotors (3) gelegenen ersten motorseitigen Hauptleitung (5b) oder zweiten motorseitigen Hauptleitung (6b) herrschenden Druck abhängig ist.

3. Regelung nach Anspruch 2,
**dadurch gekennzeichnet,**
**dass** zum Erzeugen des Bremsdrucks ein Vorsteuerventil (45) vorgesehen ist, dass ausgangsseitig mit der ersten Messfläche (35) des Bremsventils (29) verbunden ist.

4. Regelung nach Anspruch 3,
**dadurch gekennzeichnet,**
**dass** das Vorsteuerventil (45) eingangsseitig über ein Wechselventil (50) mit der ersten motorseitigen Hauptleitung (5b) bzw. zweiten motorseitigen Hauptleitung (6b) verbunden ist.

5. Regelung nach Anspruch 3 oder 4,
**dadurch gekennzeichnet,**
**dass** das Vorsteuerventil (45) zur Steuerung des Bremsdrucks mit dem Druck beaufschlagt ist, der in der stromabwärts des Hydromotors (3) gelegenen ersten motorseitigen Hauptleitung (5b) oder zweiten motorseitigen Hauptleitung (6b) herrscht.

6. Regelung nach einem der Ansprüche 2 bis 5,
**dadurch gekennzeichnet,**
**dass** das Bremsventil (29, 61, 61') eine zweite Messfläche (38, 66, 66') aufweist, die gleichsinnig zu der ersten Messfläche (35, 65, 65') auf das Bremsventil (29, 61, 61') wirkt und die aus der stromaufwärts des Hydromotors (3) gelegenen ersten pumpenseitigen Hauptleitung (5a) oder zweiten pumpenseitigen Hauptleitung (6a) mit einer hydrostatischen Kraft beaufschlagt wird.

7. Regelung nach einem der Ansprüche 1 bis 6,
**dadurch gekennzeichnet,**
**dass** die Hydropumpe mit der ersten pumpenseitigen Hauptleitung (5a) oder der zweiten pumpenseitigen Hauptleitung (6a) über ein Fahrtrichtungsventil (4) verbindbar ist.

8. Regelung nach Anspruch 7,
**dadurch gekennzeichnet,**
**dass** für einen Betrieb des hydrostatischen Getriebes (1) mit wechselnder Strömungsrichtung die Bremsventileinheit (19, 19', 60, 60', 80) symmetrisch aufgebaut ist.

9. Regelung nach einem der Ansprüche 1 bis 8,
**dadurch gekennzeichnet,**
**dass** die Bremsventileinheit (60, 60') ein erstes Bremsventil (61) und ein zweites Bremsventil (61') umfasst, wobei mittels des ersten Bremsventils (61) die erste pumpenseitige Hauptleitung (5a) mit der ersten motorseitigen Hauptleitung (5b) und mittels des zweiten Bremsventils (61') die zweite pumpenseitige Hauptleitung (6a) mit der zweiten motorseitigen Hauptleitung (6b) in Abhängigkeit von dem in der stromabwärts des Hydromotors (3) gelegenen ersten motorseitigen Hauptleitung (5b) bzw. zweiten motorseitigen Hauptleitung (6b) herrschenden Drucks gedrosselt verbindbar ist.

10. Regelung nach einem der Ansprüche 1 bis 9,
**dadurch gekennzeichnet,**
**dass** die erste pumpenseitige Hauptleitung (5a) und die erste motorseitige Hauptleitung (5b) und/oder die zweite pumpenseitige Hauptleitung (6a) und die zweite motorseitige Hauptleitung (6b) jeweils mit einem in Richtung des Hydromotors (3) öffnenden Rückschlagventils (27, 28) miteinander verbunden sind.

11. Regelung nach Anspruch 1,
**dadurch gekennzeichnet,**
**dass** die erste pumpenseitige Hauptleitung (5a) und die erste motorseitige Hauptleitung (5b) bzw. die zweite pumpenseitige Hauptleitung (6a) und die zweite motorseitige Hauptleitung (6b) parallel über das Bremsventil (81) miteinander verbindbar sind.

12. Regelung nach einem der Ansprüche 1 bis 11,
**dadurch gekennzeichnet,**
**dass** in einer Ruheposition der Bremsventileinheit (19, 19', 60, 60', 80) der Strömungsweg aus der ersten motorseitigen Hauptleitung (5b) in Richtung der ersten pumpenseitigen Hauptleitung (5a) bzw. der zweiten motorseitigen Hauptleitung (6b) in Richtung der zweiten pumpenseitigen Hauptleitung (6a) unterbrochen ist.

13. Regelung nach einem der Ansprüche 1 bis 12,
**dadurch gekennzeichnet,**
**dass** in einer Ruheposition der Bremsventileinheit (19, 19', 80) die erste motorseitige Hauptleitung (5b) mit der zweiten motorseitigen Hauptleitung (6b) gedrosselt verbunden ist.

14. Regelung nach Anspruch 7,
**dadurch gekennzeichnet,**
**dass** die Verbindung zu dem Tankvolumen (12) über das Fahrtrichtungsventil (4) erfolgt.

15. Regelung nach Anspruch 14,
**dadurch gekennzeichnet,**
**dass** das Fahrtrichtungsventil (4) eine Ruheposition aufweist, in der die erste pumpenseitigen Hauptleitung (5a) und die zweite pumpenseitige Hauptleitung (6a) mit dem Tankvolumen (12) verbunden sind.

16. Regelung nach einem der Ansprüche 3 bis 5,
**dadurch gekennzeichnet,**
**dass** der an dem Vorsteuerventil (45) eingangsseitig anliegende Druck über ein Bremsdrucksteuerventil (120) steuerbar ist.

## Claims

1. Control system for a hydrostatic transmission in an open circuit comprising a hydraulic pump (2), provided for delivery to a first pump-side main line (5a) or a second pump-side main line (6a), and a hydraulic motor (3), connected to a first motor-side main line (5b) and second motor-side main line (6b), and comprising a brake valve unit (19, 19', 60, 60', 80), via which the first pump-side main line (5a) is connectable to the first motor-side main line (5b) and the second pump-side main line (6a) is connectable to the second motor-side main line (6b),
**characterised**
**in that** the first motor-side main line (5b) or second motor-side main line (6b), situated downstream of the hydraulic motor (3), is connectable to a tank volume (12) in a throttled manner by means of the brake valve unit (19, 19', 60, 60', 80) in dependence on the pressure prevailing in said lines.

2. Control system according to Claim 1,
**characterised**
**in that** the brake valve unit (19, 19', 60, 60', 80) comprises a brake valve (29, 61, 61', 81) with a first measuring surface (35, 65, 90), and the brake valve (29, 61, 61', 81) is subjected to a brake pressure at the first measuring surface (35, 65, 90) counter to a spring force, which pressure is dependent on the pressure prevailing in the first motor-side main line (5b) or second motor-side main line (6b), situated downstream of the hydraulic motor (3).

3. Control system according to Claim 2,
**characterised**
**in that** a pilot control valve (45), connected on the outlet side to the first measuring surface (35) of the brake valve (29), is provided to produce the brake pressure.

4. Control system according to Claim 3,
**characterised**
**in that** the pilot control valve (45) is connected on the inlet side, via a shuttle valve (50), to the first motor-side main line (5b) or second motor-side main line (6b), respectively.

5. Control system according to Claim 3 or 4,
**characterised**
**in that** the pilot control valve (45) for controlling the brake pressure is subjected to the pressure prevailing in the first motor-side main line (5b) or second motor-side main line (6b), situated downstream of the hydraulic motor (3).

6. Control system according to one of Claims 2 to 5,
**characterised**
**in that** the brake valve (29, 61, 61') has a second measuring surface (38, 66, 66'), which acts on the brake valve (29, 61, 61') in the same direction as the first measuring surface (35, 65, 65') and which is subjected to a hydrostatic force from the first pump-side main line (5a) or second pump-side main line (6a), situated upstream of the hydraulic motor (3).

7. Control system according to one of Claims 1 to 6,
**characterised**
**in that** the hydraulic pump can be connected to the first pump-side main line (5a) or the second pump-side main line (6a) via a travelling direction valve (4).

8. Control system according to Claim 7,
**characterised**
**in that**, for operation of the hydrostatic transmission (1) with changing flow direction, the brake valve unit (19, 19', 60, 60', 80) is symmetrically constructed.

9. Control system according to one of Claims 1 to 8,
**characterised**
**in that** the brake valve unit (60, 60') comprises a first brake valve (61) and a second brake valve (61'), the first pump-side main line (5a) being connectable in a throttled manner to the first motor-side main line (5b) by means of the first brake valve (61) and the second pump-side main line (6a) being connectable in a throttled manner to the second motor-side main line (6b) by means of the second brake valve (61'), in dependence on the pressure prevailing in the first motor-side main line (5b) and second motor-side main line (6b), situated downstream of the hydraulic motor (3), respectively.

10. Control system according to one of Claims 1 to 9,
**characterised**
**in that** the first pump-side main line (5a) and the first motor-side main line (5b) and/or the second pump-side main line (6a) and the second motor-side main line (6b) are connected to one another each by a check valve (27, 28) which opens towards the hydraulic motor (3).

11. Control system according to Claim 1,
**characterised**
**in that** the first pump-side main line (5a) and the first motor-side main line (5b), and the second pump-side main line (6a) and the second motor-side main line (6b), respectively, are connectable to one another in parallel via the brake valve (81).

12. Control system according to one of Claims 1 to 11,
**characterised**
**in that**, in a rest position of the brake valve unit (19, 19', 60, 60', 80), the flow path from the first motor-side main line (5b) towards the first pump-side main line (5a) and from the second motor-side main line (6b) towards the second pump-side main line (6a), respectively, is interrupted.

13. Control system according to one of Claims 1 to 12,
**characterised**
**in that**, in a rest position of the brake valve unit (19, 19', 80), the first motor-side main line (5b) is connected in a throttled manner to the second motor-side main line (6b).

14. Control system according to Claim 7,
**characterised**
**in that** the connection to the tank volume (12) takes place via the travelling direction valve (4).

15. Control system according to Claim 14,
**characterised**
**in that** the travelling direction valve (4) has a rest position in which the first pump-side main line (5a) and the second pump-side main line (6a) are connected to the tank volume (12).

16. Control system according to one of Claims 3 to 5,
**characterised**
**in that** the pressure present at the pilot control valve (45) on the inlet side is controllable via a brake pressure control valve (120).

## Revendications

1. Dispositif de réglage pour une transmission hydrostatique dans un circuit ouvert comprenant une pompe hydraulique (2), qui est prévue pour le transport dans une première conduite principale (5a) côté pompe ou une seconde conduite principale (6a) côté pompe, et un moteur hydraulique (3) qui est relié à une première conduite principale (5b) côté moteur et une seconde conduite principale (6b) côté moteur, et comprenant une unité de valve de freinage (19, 19', 60, 60', 80) par laquelle la première conduite principale (5a) côté pompe peut être reliée à la première conduite principale (5b) côté moteur et la seconde conduite principale (6b) côté pompe peut être reliée à la seconde conduite principale (6b) côté moteur,
**caractérisé en ce que**
la première conduite principale (5b) côté moteur ou la seconde conduite principale (6b) côté moteur située en aval du moteur hydraulique (3) peut être reliée de façon étranglée au moyen de l'unité de valve de freinage (19, 19', 60, 60', 80) à un réservoir (12) en fonction de la pression régnant à l'intérieur de celles-ci.

2. Dispositif de réglage selon la revendication 1,
**caractérisé en ce que**
l'unité de valve de freinage (19, 19', 60, 60', 80) comprend une valve de freinage (29, 61, 61', 81) avec une première surface de mesure (35, 65, 90), et la valve de freinage (29, 61, 61', 81) est soumise sur la première surface de mesure (35, 65, 90), à l'encontre d'une force élastique, à une pression de freinage qui dépend de la pression régnant dans la première conduite principale (5b) côté moteur ou dans la seconde conduite principale (6b) côté moteur située en aval du moteur hydraulique (3).

3. Dispositif de réglage selon la revendication 2,
**caractérisé en ce que**
pour la production de la pression de freinage il est prévu une soupape pilote (45) qui est reliée côté sortie à la première surface de mesure (35) de la valve de freinage (29).

4. Dispositif de réglage selon la revendication 3,
**caractérisé en ce que**
la soupape pilote (45) est reliée côté entrée, par l'intermédiaire d'une valve de sélection (50), à la première conduite principale (5b) côté moteur respectivement la seconde conduite principale (6b) côté moteur.

5. Dispositif de réglage selon la revendication 3 ou 4,
**caractérisé en ce que**
la soupape pilote (45) pour la commande de la pression de freinage est alimentée avec la pression qui règne dans la première conduite principale (5b) côté moteur ou la seconde conduite principale (6b) côté moteur située en aval du moteur hydraulique (3).

6. Dispositif de réglage selon une des revendications 2 à 5,
**caractérisé en ce que**
la valve de freinage (29, 61,61') comprend une seconde surface de mesure (38, 66, 66') qui agit dans le même sens par rapport à la première surface de mesure (35, 65, 65') sur la valve de freinage (29, 61, 61') et qui est alimentée avec une force hydrostatique à partir de la première conduite principale (5a) côté pompe ou de la seconde conduite principale (6a) côté pompe située en amont du moteur hydraulique (3).

7. Dispositif de réglage selon une des revendications 1 à 6,
**caractérisé en ce que**
la pompe hydraulique peut être reliée à la première conduite principale (5a) côté pompe ou à la seconde conduite principale (6a) côté pompe par une valve de contrôle de sens de déplacement (4).

8. Dispositif de réglage selon la revendication 7,
**caractérisé en ce que**
pour un fonctionnement de la transmission hydrostatique (1) avec sens d'écoulement alternatif, l'unité de valve de freinage (19, 19', 60, 60', 80) est construite symétrique.

9. Dispositif de réglage selon une des revendications 1 à 8,
**caractérisé en ce que**
l'unité de valve de freinage (60, 60') comprend une première valve de freinage (61) et une seconde valve de freinage (61'), ce grâce à quoi, au moyen de la première valve de freinage (61), la première conduite principale (5a) côté pompe peut être reliée de façon étranglée à la première conduite principale (5b) côté moteur et au moyen de la seconde valve de freinage (61') la seconde conduite principale (6a) côté pompe peut être reliée de façon étranglée à la seconde conduite principale (6b) côté moteur en fonction de la pression régnant dans la première conduite principale (5b) côté moteur respectivement dans la seconde conduite principale (6b) côté moteur située en aval du moteur hydraulique (3).

10. Dispositif de réglage selon une des revendications 1 à 9,
**caractérisé en ce que**
la première conduite principale (5 a) côté pompe et la première conduite principale (5b) côté moteur et/ou la seconde conduite principale (6a) côté pompe et la seconde conduite principale (6b) côté moteur sont respectivement reliées l'une à l'autre par un clapet anti-retour s'ouvrant en direction du moteur hydraulique (3).

11. Dispositif de réglage selon la revendication 1,
**caractérisé en ce que**
la première conduite principale (5a) côté pompe et la première conduite principale (5b) côté moteur respectivement la seconde conduite principale (6a) côté pompe et la seconde conduite principale (6b) côté moteur peuvent être reliées l'une à l'autre en parallèle par la valve de freinage (81).

12. Dispositif de réglage selon une des revendications 1 à 11,
**caractérisé en ce que**,
dans une position de repos de l'unité de valve de freinage (19, 19', 60, 60', 80), la voie d'écoulement est interrompue à partir de la première conduite principale (5b) côté moteur en direction de la première conduite principale (5a) côté pompe respectivement de la seconde conduite principale (6b) côté moteur en direction de la seconde conduite principale (6a) côté pompe.

13. Dispositif de réglage selon une des revendications 1 à 12,
**caractérisé en ce que**,
dans une position de repos de l'unité de valve de freinage (19, 19', 80), la première conduite principale (5b) côté moteur est reliée de façon étranglée à la seconde conduite principale (6b) côté moteur.

14. Dispositif de réglage selon la revendication 7,
**caractérisé en ce que**
la liaison avec le réservoir (12) a lieu par la valve de contrôle de sens de déplacement (4).

15. Dispositif de réglage selon la revendication 14,
**caractérisé en ce que**
la valve de contrôle de sens de déplacement (4) présente une position de repos dans laquelle la première conduite principale (5a) côté pompe et la seconde conduite principale (6a) côté pompe sont reliées au réservoir (12).

16. Dispositif de réglage selon une des revendications 3 à 5,
**caractérisé en ce que**
la pression côté entrée agissant sur la soupape pilote (45) peut être commandée par une valve de commande de pression de freinage (120).
